Europäisches Patentamt

European Patent Office

Office européen des brevets

(11) Veröffentlichungsnummer: **0 127 790**
**B1**

(12) EUROPÄISCHE PATENTSCHRIFT

(45) Veröffentlichungstag der Patentschrift: 28.09.88

(51) Int. Cl.⁴: **G 01 P 5/10**

(21) Anmeldenummer: **84105187.3**

(22) Anmeldetag: **08.05.84**

(54) Einrichtung zum Messen physikalischer Eigenschaften von Fluiden.

(30) Priorität: 11.05.83 AT 1747/83
27.05.83 AT 1944/83
06.06.83 AT 2060/83
30.08.83 AT 3089/83
27.09.83 AT 3424/83
05.10.83 AT 3522/83
10.10.83 AT 3597/83

(43) Veröffentlichungstag der Anmeldung:
12.12.84 Patentblatt 84/50

(45) Bekanntmachung des Hinweises auf die
Patenterteilung:
28.09.88 Patentblatt 88/39

(84) Benannte Vertragsstaaten:
AT CH DE FR GB IT LI SE

(56) Entgegenhaltungen:
EP-A-0 048 689
DE-B-1 224 069
US-A-3 470 388
US-A-3 956 932
US-A-3 991 613

(73) Patentinhaber: **Klinger AG**
**Baarerstrasse 10**
**CH-6301 Zug (CH)**

(72) Erfinder: **Kopera, Adalbert**
**Ellmingergasse 8/5/7**
**A-1232 Wien (AT)**

(74) Vertreter: **Dipl.-Ing. H. Marsch Dipl.-Ing. K.**
**Sparing Dipl.-Phys.Dr. W.H. Röhl Patentanwälte**
**Rethelstrasse 123**
**D-4000 Düsseldorf (DE)**

Courier Press, Leamington Spa, England.

**Beschreibung**

Die Erfindung betrifft eine Einrichtung zur laufenden Ermittlung physikalischer Eigenschaften von Fluiden, insbesondere von deren Strömungsgeschwindigkeit. Eine Einrichtung, die die im Oberbegriff der Patentansprüche 1 und 2 genannten Merkmale aufweist, ist aus der US—A—3,956,932 bekannt.

Bei der bekannten Einrichtung sollen Windgeschwindigkeit und/oder Windrichtung bestimmt werden. Für den erstegenannten Zweck ist vorgesehen, daß der Schwingquarz—dessen Frequenz die Meßgröße darstellt—durch den Heizwiderstand mit konstanter Heizleistung beaufschlagt wird, während der Wind je nach Geschwindigkeit mehr oder weniger viel Wärme von dem Quarz abführt. Damit die Messung nicht durch Lufttemperaturunterschiede verfälscht wird, wird zunächst die Lufttemperatur selbst über die Eigenfrequenz des Schwingquartzes bei ausgeschaltetem Heizwiderstand bestimmt. Zur Bestimmung der Windrichtung werden mehrere Schwingquarze von demselben Heizwiderstand aufgeheizt, und aus der Differenz der Frequenzen, die ihrerseits von der Windrichtung und -geschwindigkeit abhängt, können die letzteren ermittelt werden.

Aufgabe der Erfindung ist es, eine Einrichtung der im Oberbegriff der Patentansprüche 1 und 2 definierten Gattung zu schaffen, mittels der die Messungen mit hoher Wiederholgenauigkeit und geringer Trägheit durchführbar sind.

Die kennzeichnenden Merkmale der Patentansprüche 1 bzw. 2 definieren jeweils eine Variante der erfindungsgemäßen Lösung.

Es ist anzumerken, daß der zweite Schwingquarz hier eine andere Funktion hat als bei der gattungsgleichen Einrichtung; die Verwendung eines gleichartigen zweiten, temperaturabhängigen Bauteils ist an sich bekannt aus der US—A—3,470,388 wie auch die fortlaufende Verarbeitung der jeweiligen Heizleistung. Aus DE—B—1 224 069 ist ein Hitzdraht-Anemometer bekannt, bei dem der Hitzdraht mit Impulsen konstanten Energieeinhalts beaufschlagt wird, um die Wärmeabfuhr durch das strömende Medium zu kompensieren, so daß die Frequenz der Impulse ein Maß für die Strömungsgeschwindigkeit ist; dies ist im Hinblick auf das letzte kennzeichnende Merkmal des Patentanspruchs 2 anzumerken.

Die Ansprüche 3 bis 8 definieren bevorzugte Ausgestaltungen des Gegenstandes der Erfindung.

Die Erfindung wird nun anhand einiger Beispiele näher erläutert:

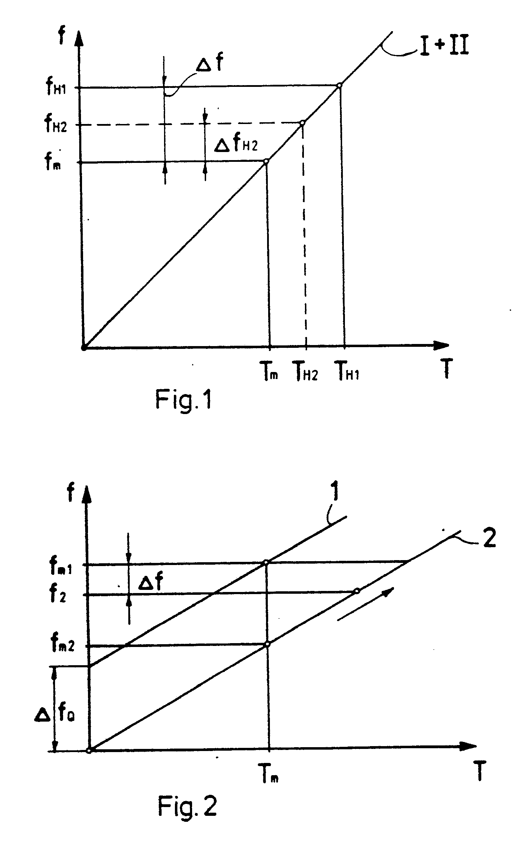

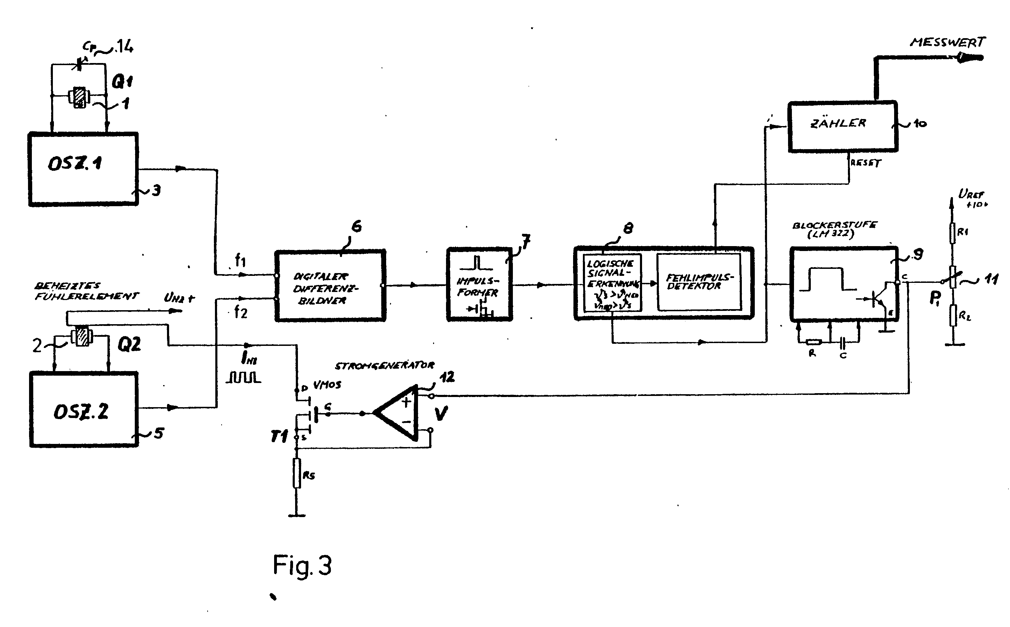

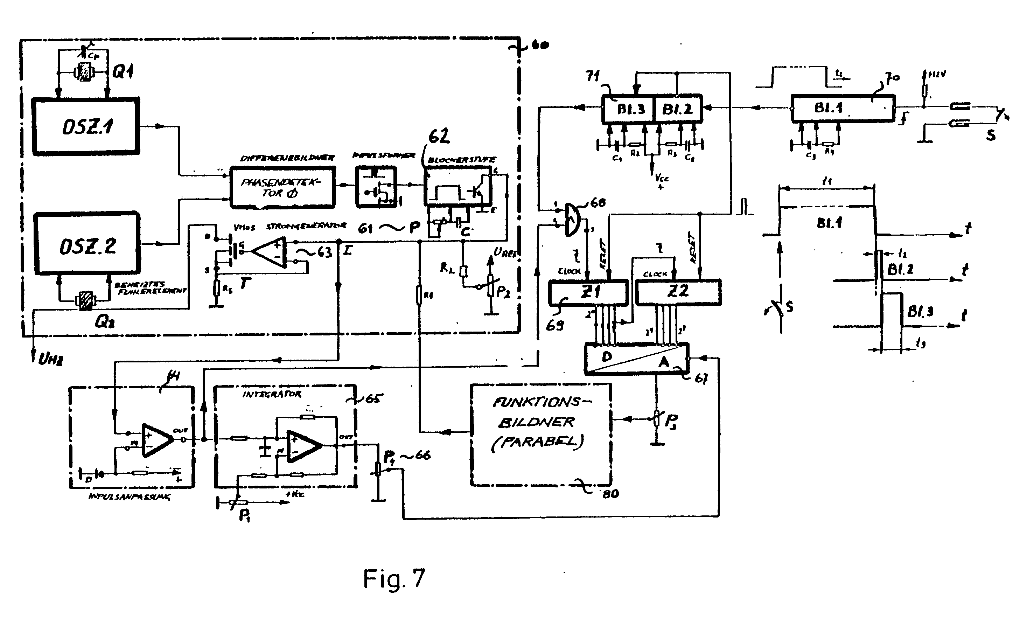

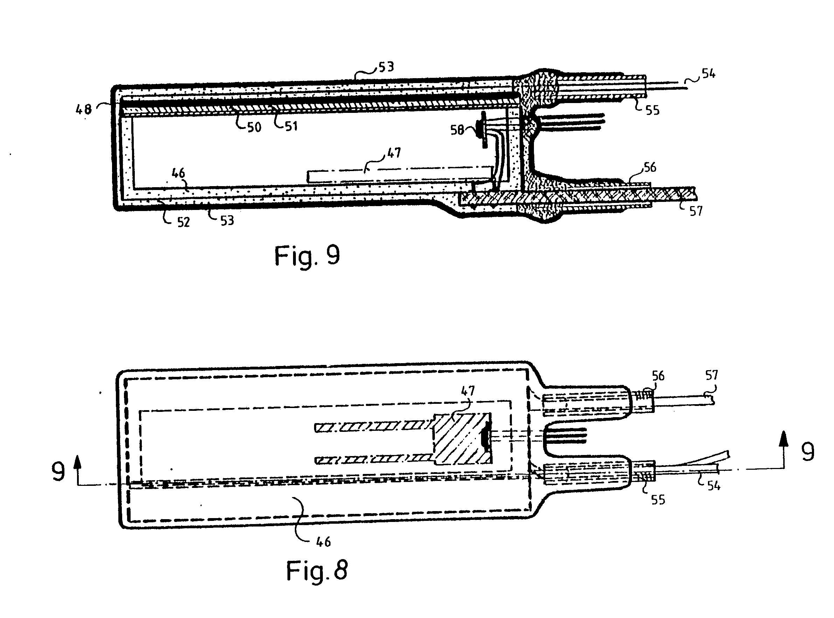

Die Fig. 1 und 2 zeigen den Meßvorgang mit Schwingquarzen mit gleichen bzw. parallelen Kennlinien in Diagramm-Form; in den Fig. 3 bis 6 sind Schaltbilder erfindungsgemäßer Meßeinrichtungen dargestellt, in Fig. 7 eine Schaltung zur Kompensation von Änderungen der Fühleroberflächen; schließlich zeigen die Fig. 8 und 9 eine Ausführung des erfindungsgemäßen Temperaturfühlers im Grundriß und im Aufrißschnitt.

Fig. 1 zeigt die Arbeitsweise einer erfindungsgemäßen Meßeinrichtung anhand eines Diagramms, in dem die Abhängigkeit der Eigenfrequenzen der beiden Schwingquarze von der Temperatur dargestellt ist. Da die beiden Schwingquarze identisch sind, weisen sie die gleichen f/T-Kennlinien I, II auf, die infolge geeigneter Schnittführung bei der Herstellung durch eine weitgehend linear temperaturabhängig Eigenfrequenz gekennzeichnet sind. Der zur Temperaturkompensation bestimmte Quarz (Kennlinie I) weist eine der Fluidtemperatur Tm entsprechende Frequenz fm auf. Der beheizte Quarz (Kennlinie II) weist bei Konstanthalten aller den Wärmetransport beeinflussenden Eigenschaften des Fluids eine infolge einer konstanten Heizleistung vergleichsweise erhöhte Eigentemperatur TH1 und entsprechende Eigenfrequenz fH1 auf, die vom Wärmetransport an das Fluid abhängen. Ändert sich nun eine Eigenschaft des Fluids, welche den Wärmetransport des beheizten Fühlers an das Fluid beeinflußt, ändert sich bei konstantbleibender Heizleistung auch die Eigentemperatur auf TH2 und damit die Eigenfrequenz des beheizten Schwingquarzes auf fH2. Die Änderung der Differenzfrequenz $\Delta f$ im Vergleich zum ursprünglichen Zustand ist damit ein Maß für die Änderung der infrage stehenden physikalischen Eigenschaft, z.B. der Geschwindigkeit oder der Dichte, unter der Voraussetzung, daß alle übrigen physikalischen Eigenschaften unverändert geblieben sind. Die Frequenzdifferenz ist somit direkt ein in digitaler Form vorliegendes Maß für die Eigenschaftsänderung.

Fig. 2 ziegt in einem f/T-Diagramm die Arbeitsweise einer erfindungsgemäßen Meßeinrichtung mit zwei Schwingquarzen, die zwar eine möglichst lineare Frequenz/Temperaturkennlinie gleicher Steigung aufweisen, wobei jedoch der unbeheizte Schwingquarz im Vergleich zum beheizten (Kennlinie 2) um einen konstanten Frequenzwert $\Delta fQ$ nach oben verschobene Kennlinie 1 aufweist. Die beiden Quarze weisen ohne Aufbringen einer Heizleistung bei einer bestimmten Fluidtempeatur Tm unterschiedliche Frequenzen fm1 und fm2 auf, wobei gemäß der erfindungsgemäßen Meßeinrichtung die Heizleistung so geregelt ist, daß die Differenz der Eigenfrequenzen ($\Delta f = fm1 - f2$) der beiden Quarze möglichst klein ist. Sofern sich nun eine physikalische Eigenschaft des die Fühler umspülenden Fluids und damit der Wärmetransport des beheizten Fühlers ändert, variiert auch die erforderliche Heizleistung, um die Frequenzdifferenz $\Delta f$ möglichst klein zu halten. Da die Heizleistung mit untereinander gleichen Impulsen unterschiedlicher Folgefrequenz aufgebracht wird, ändert sich diese Frequenz mit der jeweils variierenden physikalischen, den Wärmetransport beeinflussenden Eigenschaft.

Beim Ausführungsbeispiel nach Fig. 3 in der Arbeitsweise nach Fig. 2 dient der im Fluidbereich angeordnete Schwingquarz Q1 (1) zur Kompensation der Mediumtemperatur. Schwingquarz Q2 (2) ist elektrisch beheizt und wird bei Strömungsmessung strömungsbedingt abgekühlt. Den Schwingquarzen Q1 und Q2 (1, 2) sind die elektronischen Oszillatoren Osz1 (3) und Osz2 (5) zugeordnet, welche dem digitalen Differenzbildner 6 aufgeschaltet werden.

Die Fühler weisen gemäß Fig. 2 eine um einen konstanten Frequenzwert ΔfQ zueinander verschobene Kennlinie gleicher Steigung auf.

Das Differenzfrequenzsignal Δf aus fm1−f2, welches vom Phasendetektorsystem 6 abgegeben wird, weist Nadelimpulse auf, welche nach entsprechender Impulsformung 7 einer logischen Signalerkennung in 8 zugeführt wird. Dabei werden immer, wenn fm1 höher als f2 liegt, Triggerimpulse auf die monostabile Kippstufe 9 (Blockerstufe) abgegeben.

Diese monostabile Kippstufe 9 liefert am Ausgang Steuerimpulse mit konstanter Impulshöhe (einjustiert mit Einstellregler P 11) und konstanter Impulseweite (über R, C). Diese Steuerimpulse wirken auf einen Stromgenerator V (12), welcher Heizstromimpulse gleicher Stromhöhe und Länge dem elektrischen Heizer am Temperaturfühler Q2 (2) abgibt.

Demnach wird das geschlossene Schleifensystem die Tendenz zeigen, sich selbst abzugleichen (thermische Koppelung). Für diesen Anwendungsfall ist aber ein charakteristisches Merkmal, daß das Fühlersystem Q2 (2) hinsichtlich der Heizimpulshöhe und Länge mit Energieüberschuß betrieben wird.

Überschreitet nun während der Aufheizphase der Wert von f2 den Wert von fm, bewirkt die logische Signalerkennung in 8 (Umkehr der Phasenlage) eine Unterdrückung der Heizerimpulse zum elektrisch beheizten Quarzthermometerfühlerelement Q2 (2).

Es tritt strömungsbedingt eine Abkühlung des beheizten Fühlerelementes auf, bis zu jenem Temperaturdifferenzwert, wo wiederum bei Erreichen fm1>f2 die Heizphase einsetzt. Dies ergibt nun einen zyklischen Schwingungsvorgang hinsichtlich der Temperaturüberhöhung des Fühlerelementes Q2 (2) zum Fluid. Als Ursache dafür ist die Übergangsfunktion höherer Ordnung mit Totzeit des beheizten Quarzes anzusehen.

Mit dem in 8 enthaltenen Fehlimpulsdetektor werden Rücksetzmarken für den Binärzähler 10 abgeleitet. Demnach stellt die Anzahl der Heizimpulse während eines Zyklus eine Funktion der Strömungsgeschwindigkeit dar. Cp (14) dient für den Feinabgleich. Vorteilhaft ist bei diesem Konzept das sehr rasche Ansprechen des Meßsystems auf Schwankungen des Fluiddurchsatzes anzusehen.

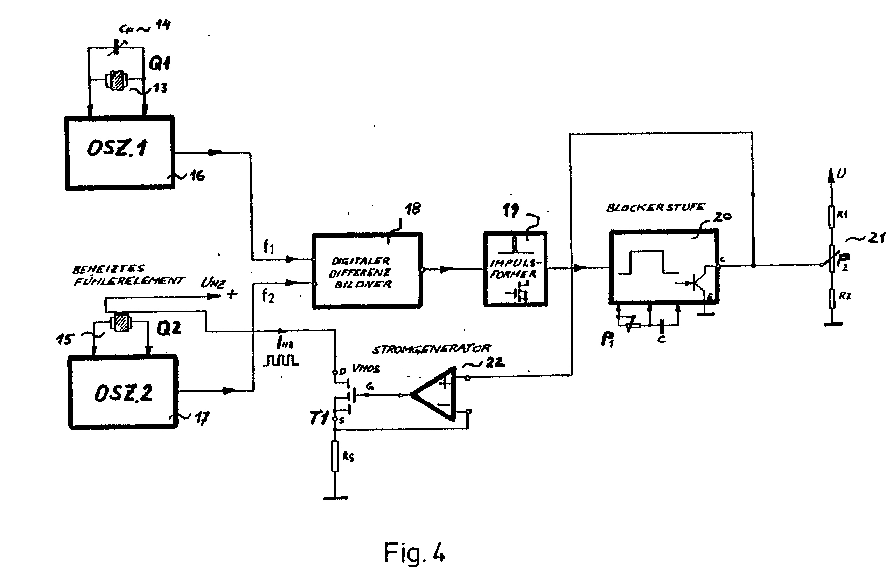

Die erfindungsgemäße Meßeinrichtung nach Fig. 4 hat wieder die Arbeitsweise nach Fig. 2. Die Quarze Q1 (13) Q2 (15) haben eine um einen konstanten Frequenzwert ΔfQ zueinander verschobene Kennlinie (mit gleicher Steigung), das gekoppelte System wird jedoch nicht mit Energieüberschuß betrieben.

Die vom digitalen Differenzbildner 18 abgegebenen Nadelimpulse werden mit der Impulsformerstufe 19 in Triggerimpulse umgesetzt, welche über die monostabile Kippstufe 20 sowie über den Einstellregler P2 (21) dem Stromgenerator 22 als Steuersignal aufgeschaltet werden und Heizstromimpulse mit definierter Impulshöhe und Länge dem elektrischen Heizer am Schwingquarz Q2 (15) zuführen.

Aufgrund der gleichen Temperaturcharakteristik von Q1 (13) und Q2 (15) wird sich das geschlossene Schleifensystem abgleichen, so daß sich eine Restfrequenz einstellt (bleibende Regelabweichung als Frequenz der Heizerimpulse), welche als Funktion der physikalischen Eigenschaft, z.B. der Fluidgeschwindigkeit, zu verstehen ist.

Es stellt sich somit zu jeder Fluidgeschwindigkeit eine zugeordnete Schleifenfrequenz ein, welche die Meßgröße darstellt. Das System arbeitet selbstkompensierend. Cp (14) dient für den Feinabgleich.

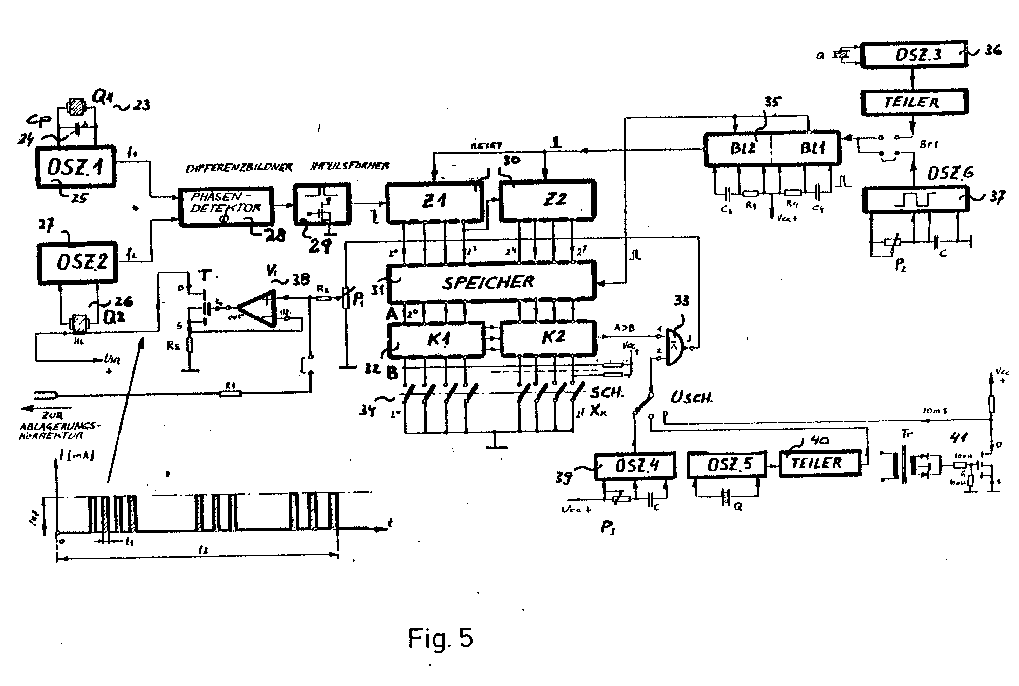

Beim Beispiel nach Fig. 5 haben der unbeheizte Schwingquarz Q1 (23) und der elektrisch beheizte Schwingquarz Q2 (26) die gleich Frequenz/Temperaturkennlinie, es erfolgt jedoch eine Differenzfrequenzregelung auf einen festgelegten konstanten Sollwert. Mit der Meßschaltung wird über einen digitalen Differenzbildner 28 dem Impulsformer 29 und den Zählern 30 über den Speicher 31 die binäre Größe den digitalen Kompensatorsystemen 32 aufgeschaltet (Differenzfrequenz).

Mit dem binären Einstellschalter SCH (34) wird eine gewünschte Frequenzverstimmung vorgegeben (Temperaturüberhöhung). Über eine Torstufe 33 werden unter Zuhilfenahme externer Steuerimpulse über Osz4 (39) oder Osz5 (40) (geteilte Quarzfrequenz) oder unmittelbar aus der Netzfrequenz abgeleitet so lange Steuerimpulse dem Konstantstromgenerator 38 zugeführt, bis durch Aufheizen des Schwingquarzes Q2 (26) die gewünschte konstante Differenzfrequenz und damit die vorgegebene konstante Temperaturüberhöhung des Fühlers Q2 (26) zum Fluid bewerkstelligt wird.

Das System ziegt Zweipunkt-Reglerverhalten, und eine durch Fluidströmung bedingte Abkühlung von Q2 (26) bewirkt ein Nachführen von Heizimpulsen vom kompensatorgesteuerten Tor 33.

Die zeitliche Anzahl der jeweils nachgeführten Heizimpulse stellt eine Funktion der physikalischen Eigenschaft dar (Meßgröße).

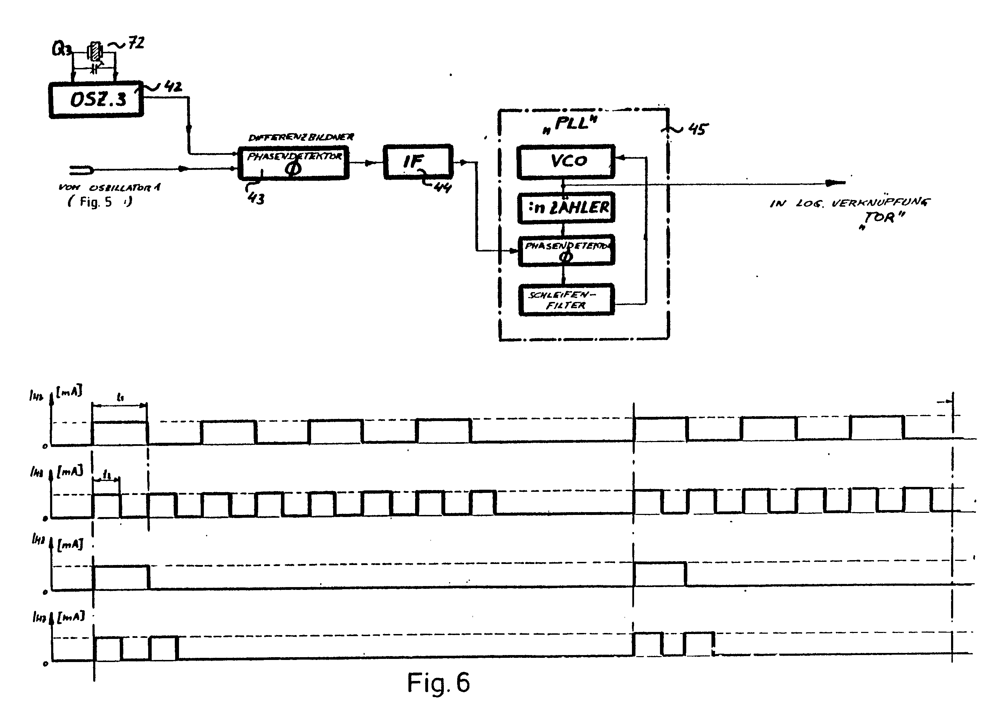

Fig. 6 zeigt die Erweiterung der Einrichtung nach Fig. 5 zu einem Wärmemengenmesser für Heizanlagen. Dabei wird dem Tor 33 keine Konstantfrequenz, wie in Fig. 5 dargestellt, aufgeschaltet, sondern die sich aus der Differenztemperatur zwischen Vorlauf und Rücklauf des Heizstranges (TV—TR) ergebende Differenzfrequenz zwischen Quarz 3 (72) im Vorlauf und Quarz 1 (23) im Rücklauf. Mit dem Differenzbildner (Phasendetektorsystem) 43 wird die Meßgröße der Differenztemperatur zwischen Vorlauf und Rücklauf erzeugt und nach erfolgter Impulsformung mit 44 ein PLL-Schleifensystem angesteuert, um eine Frequenzvervielfachung (um den Faktor "n") zu erreichen. Dies könnte, um eine hohe Auflösung zu erreichen, notwendig sein (Quantisierungsfehler bei kleinen Werten TV—TR). Q1 (23) Q2 (26) (Fig. 5) befinden sich im Wärmeträgerrücklaufstrang. Während der Öffnungszeiten des Tores 33 wird demnach die Differenztemperatur zwischen Vorlauf und Rücklauf unmittelbar verknüpft. Der Vorlaufteil nach Fig. 5 kann nach dem Speicher 31, dessen Inhalt als Adresse aufzufassen ist, einem EPROM aufgeschaltet werden, dessen Ausgangsleitungen mit den Kompensatoren K1, K2 (32) verschaltet stehen.

Damit kann erreicht werden, daß im höheren Strömungsbereich eine absichtliche funktionelle Aufhebung der Temperaturüberhöhung des Fühlers Q2 (26) erreicht wird und auf diese Weise eine Linearisierung der Meßgröße über einen hohen Strömungsbereich durchgeführt werden kann. Die notwendige Linearisierungscharakteristik ist im EPROM eingespeichert. Um bei Eigenkonvektion (Strömungsstillstand) keine Zählimpulse zu erlangen, kann über einen Ruhestrom im Heizerkreis eine diesbezügliche Kompensation realisiert werden.

Fig. 7 zeigt eine Zusatzeinrichtung für die Ausführungsform nach Fig. 4 zur Kontrolle eventueller Ablagerungen. Dabei wird im Falle Strömungsmessung als Normalzustand das ruhende Medium angenommen und die Eingangsgrößen auf der ablagerungsfreien Sonde ermittelt, so daß zu späteren Zeitpunkten, nachdem die Meßeinrichtung bereits betriebsmäßig eingesetzt war, die Abweichungen der Eingangsgrößen im gleichen Zustand ermittelbar sind. Dies ist eine aussagekräftige Information (Differenz beider Zustände) über etwaige am beheizten Sondensystem stattgefundene Mediumabscheidungen. Der somit ermittelte "Korrekturfaktor" wird in der Meßelektronik digital abgespeichert und die jeweilige Korrekturgröße stellt das Produkt dieses "Korrekturfaktors" mit dem jeweiligen Meßergebnis dar. Der Korrektureingriff kann über die "Höhe" oder "Zeitdauer" der Heizimpulse realisiert werden, da ja das kleinste, dem elektrischen Heizer zugeführte Energiepaket als Zeitfläche eines Heizimpulses angesehen werden kann.

Beim Beispiel nach Fig. 7 ist von der Ausführungsform nach Fig. 4 ausgegangen. Erfindungsgemäß bildet sich in der Meßschleife ein Gleichgewichtszustand hinsichtlich der Frequenz des Schleifensignales und der durch Strömung oder Eigenkonvektion abgeführten Wärmeenergie. Mittels des Potentiometers 61 wird an der Blockerstufe 62 (monostabile Kippstufe) die Länge der Heizerimpulse eingestellt. Die Höhe der Heizerimpulse ist direkt proportional dem Signal am nichtinvertierten Eingang des Operationsverstärkers 63, der als Konstantstromgenerator verschaltet ist. Die Impulsanpassungsstufe 64 stellt den Einsatz eines Operationsverstärkers als Komparator dar und liefert demnach infolge einstellbedingter variabler Eingangsimpulssignale am Stromgenerator 63 konstante Ausgangsimpulse, deren Länge von der Blockerstufe 62 vorgegeben sind. Das Ausgangssignal von 64 wird einem Integrator 64 aufgeschaltet, der entsprechend der zeitlichen Anzahl der Heizerimpulse eine steigende analoge Ausgangsgröße abgibt. Dieses Ausgangssignal wird über einen entsprechenden Einstellregler P4 (66) dem multiplizierenden Analog/Digitalumsetzer 67 aufgeschaltet.

Dieses erwähnte Ausgangssignal der Impulsanpassungsstufe 64 wird nun über eine UND-Verknüpfungsstufe 68 dem Clockeingang der Zähler 69 zugeleitet. Wird nun ein binäres Schaltelement "S" z.B. an einer Strömungsarmatur betätigt, wird die Blockerstufe 70 angesteuert und liefert einen etwas längeren Zeitimpuls, damit sich das komplette Meßsystem eventuell thermisch ausgleichen kann. Blocker 1 (70) stellt aber keine unbedingte Notwendigkeit dar. Die negative Impulsflanke des von 70 abgegebenen Signales bewirkt die Ansteuerung des Blockers 2 (71), welcher die beiden Binärzähler 69 auf Null setzt. Mit der negativen Flanke wiederum wird die Blockerstufe 3 (71) angeregt und liefert an der UND-Verknüpfung 68 eine logische "1" (Torzeit).

Der bei der Ersteichung in den Zählern Z1, Z2 (69) gespeicherte Wert wird also z.B. nach einer Heizperiode einer Korrektur unterzogen.

Diese Korrekturgröße wird nun mit einem der Schleifenfrequenz entsprechenden analogen Wert (über 64, 65) multipliziert und wirkt über den Funktionsbildner 80 auf die Höhe des Steuersignales für den Stromgenerator 63.

Zwangsläufig wird die dem Heizersystem des beheizten Fühlerelementes Q2 zugeführte Energie infolge Verkleinerung der Aussteuerhöhe der Impulse kleiner, und die Frequenz der Schleife stellt sich auf den ursprünglichen Eichwert ein.

Der in Fig. 8 und 9 dargestellte erfindungsgemäße Temperaturfühler weist ein keramisches Gehäuse 46 auf, welches den Schwingquarz 47 in Form eines Stimmgabelquarzes enthält. Die Oberseite des Gehäuses 46 ist mittels einer gasdichten Abdeckplatte 51 aus Glas, unter Zwischenschaltung einer Dichtung 50, verschlossen. Das Heizelement ist auf der Abdeckplatte in Form eines Films 48, z.B. aus Gold, durch Aufdampfen od. dgl. aufgebracht. Über die elektrischen Anschlüsse 57 zum Quarz 47 und über die Anschlußverbindungen 54 des Heizelementes 48 sind Durchführrohre 55, 56 aufgeschoben. Das komplette Gehäuse 46 ist mit einer elektrisch isolierenden Schutzschicht 52 versehen, die eine gute Wärmeleitfähigkeit aufweisen muß. Die Durchführrohre 55, 56 sind mittels eines elektrisch isolierenden Klebers mit dem Gehäuse 46 verbunden. Diese Durchführungsrohre 55, 56 können auch die mechanische Halterung des Fühlers bilden. Die elektrisch isolierende Beschichtung 52 kann auch mit einer weiteren Abdeckschicht 53 versehen sein, die aus Metall oder anderen Materialien guter Wärmeleitfähigkeit bestehen kann. Im Gehäuse 46 können Elemente der Auswerteinrichtung, vorzugsweise in Form eines "Chips" 58, enthalten sein, wobei aber Sorge zu tragen ist, daß das im Gehäuse enthaltene Schutzgas nicht wesentlich erwärmt wird.

Zur Realisierung der notwendigen Zeitbasis für die Meßwertverarbeitung im Quarzthermometergehäuse 46 ist es zweckmäßig, in derselben Schutzgasatmosphäre einen Quarzoszillator (z.B. Uhrenquarz mit temperaturabhängigem Schnitt) vorzusehen.

**Patentansprüche**

1. Einrichtung zur laufenden Ermittlung physikalischer Eigenschaften von Fluiden, insbesondere von deren Strömungsgeschwindigkeit, umfassend einen aufheizbaren Temperaturmeßfühler (2, 15), der dem Fluid ausgesetzt ist und aus einem elektrischen Heizwiderstand und einem mit ihm thermisch gekoppelten und eine temperaturabhängige Eigenfrequenz aufweisenden Schwingquarz besteht, und eine digital arbeitende Auswerteeinrichtung, der als eine wesentliche Eingangsgröße ein von der Schwingfrequenz des Schwingquarzes abgeleitetes digitales Signal zugeführt ist, wobei die Differenz der Schwingfrequenzen ein direktes Maß für die zu messende Eigenschaft, insbesondere die Strömungsgeschwindigkeit, ist, die eine Funktion der Wärmeabgabe des aufheizbaren Schwingquarzes an das Fluid ist, dadurch gekennzeichnet, daß

der Heizwiderstand und der Schwingquarz derart thermisch gekoppelt sind, daß beide im wesentlichen gleiche Temperatur aufweisen,

ein als Referenzfühler zur Kompensation der Fluidtemperatur dienender zweiter Schwingquarz (1, 13) mit temperaturabhängiger Eigenfrequenz vorgesehen ist, der ebenfalls dem Fluid ausgesetzt ist,

der Auswerteeinrichtung (6—10, 18—20) als wesentliche Eingangsgrößen die Differenz der Schwingfrequenzen beider Schwingquarze und ein die jeweils dem Heizwiderstand zugeführte Heizleistung repräsentierendes digitales Signal aufgeschaltet sind,

die Heizleistung auf einen konstanten Wert geregelt wird und die Schwingquarze gleichen temperaturabhängigen Frequenzgang aufweisen.

2. Einrichtung zur laufenden Ermittlung physikalischer Eigenschaften von Fluiden, insbesondere von deren Strömungsgeschwindigkeit, umfassend einen aufheizbaren Temperaturmeßfühler (26), der dem Fluid ausgesetzt ist und aus einem elektrischen Heizwiderstand und einem mit ihm thermisch gekoppelten und eine temperaturabhängige Eigenfrequenz aufweisenden Schwingquarz besteht, und eine digital arbeitende Auswerteeinrichtung, der als eine wesentliche Eingangsgröße ein von der Schwingfrequenz des Schwingquarzes abgeleitetes digitales Signal zugeführt ist, das ein Maß für die physikalische Eigenschaft, insbesondere die Strömungsgeschwindigkeit, ist, die eine Funktion der Wärmeabgabe des aufheizbaren Schwingquarzes an das Fluid ist, dadurch gekennzeichnet, daß

der Heizwiderstand und der Schwingquarz derart thermisch gekoppelt sind, daß beide im wesentlichen gleiche Temperatur aufweisen,

ein als Referenzfühler zur Kompensation der Fluidtemperatur dienender zweiter Schwingquarz (24) mit temperaturabhängiger Eigenfrequenz vorgesehen ist, der ebenfalls dem Fluid ausgesetzt ist,

der Auswerteeinrichtung (28—40) als wesentliche Eingangsgrößen die Differenz der Schwingfrequenzen beider Schwingquarze und ein die jeweils dem Heizwiderstand zugeführte Heizleistung repräsentierendes digitales Signal aufgeschaltet sind,

die Schwingquarze gleichen temperaturabhängigen Frequenzgang aufweisen und die Differenzfrequenz auf einen festgelegten konstanten Wert geregelt ist, indem dem Heizwiderstand Heizimpulse konstanter Stromhöhe und -dauer zugeführt werden, deren Anzahl pro Zeiteinheit von der Regelabweichung abhängt.

3. Meßeinrichtung nach Anspruch 2, dadurch gekennzeichnet, daß die beiden Quarze (Q1, Q2) unterschiedliche Nominalfrequenzen aufweisen und die Differenzfrequenz auf Null geregelt ist.

4. Meßeinrichtung nach Anspruch 2, dadurch gekennzeichnet, daß die beiden Quarze (Q1, Q2) gleiche Nominalfrequenz aufweisen und die Differenzfrequenz auf einen konstanten positiven Wert geregelt ist.

5. Meßeinrichtung nach einem der Ansprüche 1 bis 4, dadurch gekennzeichnet, daß die Eingangsgrößen für mindestens einen Normalzustand des Fluids, z.B. fehlende Strömung bei Geschwindigkeitsmessung, für den Vergleich mit späteren Eingangsgrößen des gleichen Normalzustandes speicherbar sind.

6. Meßeinrichtung nach einem der vorangehenden Ansprüche, dadurch gekennzeichnet, daß als Schwingquarz ein Stimmgabelquarz (47) vorgesehen ist, an dessen Gehäuse (46) der Heizwiderstand (48) außen flächig anliegt.

7. Meßeinrichtung nach Anspruch 6, dadurch gekennzeichnet, daß der Heizwiderstand (48) als Film auf einer Außenfläche des Gehäuses, insbesondere einer Abdeckplatte (51), ausgebildet, insbesondere aufgedampft ist.

8. Meßeinrichtung nach Anspruch 6 oder 7, dadurch gekennzeichnet, daß im Gehäuse (46) des Schwingquarzes integrierte Schaltkreise (58) für die Auswerteeinrichtung angeordnet sind.

**Revendications**

1. Dispositif pour déterminer en continu des propriétés physiques de fluides, notamment leur vitesse d'écoulement, et comportant un capteur de température (2, 15), pouvant être chauffé, qui est soumis au fluide et est constitué par une résistance de chauffage électrique et par un cristal oscillateur accouplé thermiquement à cette résistance et possédant une fréquence propre dépendant de la température, et un dispositif analyseur travaillant en mode numérique et auquel est envoyé, en tant que grandeur d'entrée essentielle, un signal numérique dérivé de la fréquence d'oscillation du cristal oscillateur, la différence des fréquences d'oscillation étant une mesure directe de la propriété à mesurer, notamment de la vitesse d'écoulement, qui est une fonction du transfert de chaleur du cristal oscillateur, pouvant être chauffé, au fluide, caractérisé en ce que

la résistance de chauffage et le cristal oscillateur sont accouplés thermiquement de telle sorte que ces deux éléments possèdent sensiblement la même température,

il est prévu un second cristal oscillateur (1, 13), qui est utilisé comme capteur de référence pour la compensation de la température du fluide, possède une fréquence propre dépendant de la température et est également soumis au fluide,

la différence de fréquences d'oscillation des deux cristaux oscillateurs et un signal numérique représentant respectivement la puissance de chauffage envoyée à la résistance de chauffage, sont envoyés, en tant que grandeurs d'entrée essentielles, au dispositif d'évaluation (6—10, 18—20), et

la puissance de chauffage est réglée à une valeur constante et les cristaux oscillateurs possèdent une réponse en fréquence identique, dépendant de la température.

2. Dispositif pour déterminer en continu des propriétés physiques de fluides, notamment leur vitesse d'écoulement, et comportant un capteur de température (26), pouvant être chauffé, qui est soumis au fluide et est constitué par une résistance de chauffage électrique et par un cristal oscillateur accouplé thermiquement à cette résistance et possédant une fréquence propre dépendant de la température, et un dispositif analyseur travaillant en mode numérique, et auquel est envoyé, en tant que grandeur d'entrée essentielle, un signal numérique dérivé de la fréquence d'oscillation du cristal oscillateur, qui est une mesure directe de la propriété à mesurer, notamment de la vitesse d'écoulement, qui est une fonction du transfert de chaleur du cristal oscillateur, pouvant être chauffé, au fluide, caractérisé en ce que

la résistance de chauffage et le cristal oscillateur sont accouplés thermiquement de telle sorte que ces deux éléments possèdent sensiblement la même température,

il est prévu un second cristal oscillateur (24), qui est utilisé comme capteur de référence pour la compensation de la température du fluide, possède une fréquence propre dépendant de la température et est également soumis au fluide,

la différence des fréquences d'oscillation des deux cristaux oscillateurs et un signal numérique représentant respectivement la puissance de chauffage envoyée à la résistance de chauffage, sont envoyés, en tant que grandeurs d'entrée essentielles, au dispositif analyseur (28—40), et

les cristaux oscillateurs possèdent la même réponse en fréquence, qui dépend de la température, et la fréquence différentielle est réglée à une valeur constante fixe, par le fait que des impulsions de chauffage, dont l'amplitude et la durée du courant sont constantes et dont le nombre par unité de temps dépend de l'écart de réglage, sont envoyées à la résistance de chauffage.

3. Dispositif de mesure selon la revendication 2, caractérisé en ce que les deux cristaux (Q1, Q2) possèdent des fréquences nominales différentes et que la fréquence différentielle est réglée à zéro.

4. Dispositif de mesure selon la revendication 2, caractérisé en ce que les deux cristaux (Q1, Q2) possèdent la même fréquence nominale et que la fréquence différentielle est réglée à une valeur positive constante.

5. Dispositif de mesure selon l'une des revendications 1 à 4, caractérisé en ce que les grandeurs d'entrée pour au moins un état normal du fluide, par exemple l'absence d'un écoulement dans le cas d'une mesure de vitesse, peuvent être mémorisées pour la comparaison à des grandeurs d'entrée, obtenues ultérieurement, du même état normal.

6. Dispositif de mesure selon l'une des revendications précédentes, caractérisé en ce qu'il est prévu, comme cristal oscillateur, un cristal à diapason (47), contre le boîtier (46) duquel la résistance de chauffage (48) est appliquée extérieurement sur une certaine étendue.

7. Dispositif de mesure selon la revendication 6, caractérisé en ce que la résistance de chauffage (48) est réalisée sous la forme d'une pellicule, déposée notamment par évaporation, sur une surface extérieure du boîtier, notamment une plaque de revêtement (51).

8. Dispositif de mesure selon la revendication 6 ou 7, caractérisé en ce que les circuits intégrés (58) pour le dispositif analyseur sont disposés dans le boîtier (46) du cristal oscillateur.

**Claims**

1. An arrangement for the continuous determination of physical properties of fluids, especially of the flow rate thereof, comprising a heatable temperature sensor (2, 15) which is exposed to the fluid, and consists of an electrical heating resistor and of an oscillating crystal coupled thermally to the heating resistor and having a temperature-dependent natural frequency, and a digitally operating evaluating device to which, as an essential input variable, a digital signal derived from the oscillating frequency of the oscillating crystal is fed, wherein the difference in the oscillating frequencies is a direct measurement of the property to be measured, especially the flow velocity, which is a function of the heat output of the heatable oscillating crystal to the fluid, characterized in that

the heating resistor and the oscillating crystal are coupled thermally in such a manner that both have essentially the same temperature,

a second oscillating crystal (1, 13) with a temperature-dependent natural frequency serving as a reference sensor for compensation of the fluid temperature is provided, and is also exposed to the fluid,

the difference between the oscillating frequencies of the two oscillating crystals and a digital signal representing the heat output fed to the heating resistor in each case are applied as

essential input variables to the evaluating facility (6—10, 8—20),

the heat output is regulated to a constant value and the oscillating crystals have the same temperature-dependent frequency response.

2. An arrangement for the continuous detection of physical properties of fluids, especially of the flow rate thereof, comprising a heatable temperature sensor (26) which is exposed to the fluid and consists of an electrical heating resistor and of an oscillating crystal coupled thermally to the heating resistor and having a temperature-dependent natural frequency, and a digitally operating evaluating device to which, as an essential input variable, a digital signal derived from the oscillating frequency of the oscillating crystal is fed, which signal is a measure of the physical property, especially the flow velocity, which is a function of the heat output of the heatable oscillating crystal to the fluid, characterized in that

the heating resistor and the oscillating crystal are coupled thermally in such a manner that both have essentially the same temperature,

a second oscillating crystal (24) with a temperature-dependent natural frequency serving as a reference sensor for compensation of the fluid temperature is provided, and is also exposed to the fluid,

the difference between the oscillating frequencies of the two oscillating crystals and a digital signal representing the heat output fed to the heating resistor in each case are applied as essential input variables to the evaluating facility (28—40),

the oscillating crystals have the same temperature-dependent frequency response and the frequency difference is regulated to a fixed constant value in that heating pulses of constant current level and duration are fed to the heating resistor, the number per unit of time of which pulses is dependent on the system deviation.

3. A measuring arrangement according to claim 2, characterized in that the two crystals (Q1, Q2) have different nominal frequencies and the frequency difference is adjusted to zero.

4. A measuring arrangement according to claim 2, characterized in that the two crystals (Q1, Q2) have the same nominal frequency and the frequency difference is adjusted to a constant positive value.

5. A measuring arrangement according to one of claims 1 to 4, characterized in that the input variables for at least one normal state of the fluid, for example zero flow, when measuring the velocity, can be stored for comparison with subsequent input variables of the same normal state.

6. A measuring arrangement according to one of the preceding claims, characterized in that a tunable crystal (47) is provided as the oscillating crystal, to the housing (46) of which the heating resistor (48) is attached externally in sheet form.

7. A measuring arrangement according to claim 6, characterized in that the heating resistor (48) is formed as a film on the external surface of the housing, especially a cover plate (51), and in particular is applied by vapour deposition.

8. A measuring arrangement according to claim 6 or 7, characterized in that switching circuits (58) integrated in the housing (46) of the oscillating crystal are arranged for the evaluating facility.

Fig. 1

Fig. 2

Fig. 3

Fig. 4

Fig. 5

0 127 790

Q₃ ~72

OSZ.3 ~42

DIFFERENZ BILDNER
PHASENDETEKTOR ∅

VON OSZILLATOR 1
( Fig. 5 )

43

IF

44

„PLL" ~45

VCO

:n ZÄHLER

PHASENDETEKT. ∅

SCHLEIFEN-FILTER

IN LOG. VERKNÜPFUNG „TOR"

$I_{42}$ [mA]  $t_0$

$I_{41}$ [mA]  $t_1$

$I_{42}$ [mA]

$I_{43}$ [mA]

Fig. 6

Fig. 7

Fig. 9

Fig. 8